# EUROPÄISCHE PATENTANMELDUNG

(11) **EP 0 770 424 A1**
(43) Veröffentlichungstag der Anmeldung: **02.05.1997**
(21) Anmeldenummer: 96116911.7
(22) Anmeldetag: 21.10.1996
(51) Int. Cl.: B01J 19/10

(54) **Apparat zur Ultraschallbehandlung von Produkten**

(30) Priorität: 24.10.1995 DE 19539533
(71) Anmelder: BASF AKTIENGESELLSCHAFT, 67056 Ludwigshafen (DE)
(72) Erfinder: Bechtel, Siegfried, 68623 Lampertheim (DE); Ulonska, Armin, Dr., 67112 Mutterstadt (DE); Heilig, Edwin, 67240 Bobenheim-Roxheim (DE); Reich, Wolfgang, Dr., 67133 Maxdorf (DE)
(74) Vertreter: Isenbruck, Günter, Dr.

(57) **Zusammenfassung**

Die Erfindung sieht einen Apparat mit (2) Innenraum zur Schallbehandlung von Produkten, insbesondere zur Vermischung oder Entmischung mindestens zweier Produkte im Innenraum, vor, wobei im Innenraum mindestens eine insbesondere stabförmige Sonotrode (1) angeordnet ist.

## Beschreibung

Die vorliegende Erfindung betrifft einen Apparat mit Innenraum zur Schallbehandlung von Produkten, insbesondere zur Vermischung oder Entmischung mindestens zweier Produkte im Innenraum.

Bei chemischen Prozessen liegen die Reaktanden häufig in verschiedenen Phasen vor. Damit eine Reaktion ablaufen kann, müssen die Reaktanden durch eine, in einigen Fällen auch mehrere Phasengrenzflächen transportiert werden, beispielsweise bei der laugenkatalysierten Kondensation von niederen Aldehyden und bei heterogen katalysierten Hydrierreaktionen. Die Intensivierung des Stoffaustausches ist auch von hohem wirtschaftlichen Interesse, da Umsetzungszeiten verringert werden können.

Aus K.S. Suslick, S.J. Doktzcz, E.B. Flint, *On the Origin of Sonoluminescence and Sonochemistry*, Ultrasonics 28 (1990) Sept, S. 280-290; T. Ando, T. Kimura, *Reactivity and Selectivity in Organic Sonochemical Reactions Involving Inorganic Solids*, Ultrasonics 28 (1990) Sept, S. 326-332; J.L. Luche, C. Einhorn, J. Einhorn, J.C. de Souza Barboza, C. Petrier, Dupuy, P. Delair, C. Allavena, T. Tuschl, *Ultrasonic Waves as Promoters of Radical Processes in Chemistry: The Case of Organometalic Reactions,* Ultrasonics 28 (1990) Sept, S. 316-312, und T. Mason, J. Lorimer, *Sonochemistry Theory, Applications, and Uses of Ultrasound in Chemistry*, John Wiley and Sons, New York (1988), ist es theoretisch bekannt, daß sich mit Hilfe von Ultraschall die Geschwindigkeit von chemischen Umsetzungen erhöhen läßt.

Aus EP 0 584 685 ist es bekannt, mindestens neun Ultraschallgeber in die Wand eines Rührkessels einzusetzen. Davon werden mindestens drei Ultraschallgeber am Boden und mindestens sechs Ultraschallgeber am Mantel des Rührkessels angeordnet. Diese Ultraschallgeber können mit einer an die Wand des Rührkessels angeflanschten Haube versehen werden.

Aus US 4,369,100 ist ein Verfahren bekannt, mit dem chemische Reaktionen in kontinuierlichen Systemen dadurch gefördert werden, daß an der Außenseite eines ersten Rohres, in dem konzentrisch ein zweites Rohr angeordnet ist, Resonatoren angebracht werden, die den Raum zwischen dem Außenrohr und dem Innenrohr, in dem Flüssigkeit von einem Einlaß zu einem Auslaß fließen kann, derart beschallen, daß sich Ultraschallkavitationen in der durchströmenden Flüssigkeit bilden.

In WO 92/12790 ist eine modulare Einheit für die kontinuierliche Beschallung von Substanzen oder Reaktanden mit Ultraschall beschrieben, die einen rohrförmigen metallischen Körper umfaßt, der eine zylindrische Innenfläche und einen geradegerichteten kreisförmigen Querschnitt aufweist, der an seiner Eingangs- und seiner Ausgangsseite geöffnet ist und bei dem die Innenfläche des rohrförmigen metallischen Körpers in seinem modalen Bereich einen radial hervorstehenden Kragen koaxial zu dem rohrförmigen metallischen Körper aufweist, und in dem mindestens ein Ultraschallgeber radial integral in dem Kragen an dessen Peripherie angeordnet ist, wobei die Frequenz des Ultraschallgebers gleich der Vibrationsfrequenz des Kragens und der Frequenz der Längsschwingung des rohrförmigen metallischen Körpers ist.

Nachteile der bekannten Verfahren und Vorrichtungen bestanden darin, daß Abdichtungsprobleme im Bereich der Sonotrode und dem Reaktionsraum auftreten, daß die Beschallung inhomogen ist und ein geringer Wirkungsgrad erreicht wird. Außerdem entstehen durch die Ankopplung der Ultraschallgeber hohe Reibungsverluste. Die Anbringung der Ultraschallgeber in die Behälterwand oder das Anbringen an der Außenseite erfordert außerdem einen hohen technischen Konstruktions- und Fertigungsaufwand.

Eine Aufgabe der vorliegenden Erfindung war es daher, einen Apparat bereitzustellen, mit dem eine oder mehrere Produkte durch Ultraschall mit einem verbesserten Wirkungsgrad angeregt bzw. vermischt werden können.

Eine weitere Aufgabe der vorliegenden Erfindung ist darin zu sehen, ein Verfahren bereitzustellen, mittels dem chemische Reaktionen effizienter durchgeführt werden können und/oder mittels dem Stoffübergänge in mehrphasigen Stoffsystemen intensiviert werden können.

Diese Aufgabe wird durch einen Apparat mit Innenraum zur Schallbehandlung von Produkten gelöst, wie er in Anspruch 1 definiert ist. Vorteilhafte Weiterbildungen sind in den Unteransprüchen behandelt.

Als "Produkte" werden dabei Substanzen wie chemische Verbindungen, die Katalysatoren, Edukte oder Produkte von chemischen Umsetzungen sein können, die Substanzen enthaltende Phasen und Gemische wie auch chemisch inerte Substanzen, Phasen und Gemische bezeichnet. Die Gemische können dabei mehrphasig sein.

Insbesondere wird die Aufgabe durch einen Apparat mit Innenraum zur Schallbehandlung von Produkten, insbesondere zur Vermischung oder Entmischung mindestens zweier Produkte im Innenraum, gelöst, bei dem im Innenraum mindestens eine insbesondere stabförmige Sonotrode angeordnet ist. Diese Sonotrode ist im Innenraum derart angeordnet, daß sie im wesentlichen von Produkten umgeben ist, so daß die von der Sonotrode ausgehenden Schallwellen die größtmögliche Wirkung innerhalb des Produkts erzielen können. Besonders bevorzugt wird eine stabförmige Sonotrode eingesetzt, die ein im wesentlichen zylindrisches Sonarfeld erzeugt. Dieser Apparat wird bevorzugt zur Schallbehandlung von Produkten eingesetzt, insbesondere um die Vermischung oder Entmischung mehrerer Produkte zu unterstützen. Durch das Anbringen der Sonotrode im Innenraum werden Dämpfungen vermieden, die beim Anbringen der Sonotrode außerhalb des Apparates auftreten würden. Somit kann die Schallbehandlung von Produkten effizienter und mit einem höheren Wirkungsgrad erfolgen.

Die Sonotrode dient zur Erzeugung von Schallwellen, insbesondere Ultraschallwellen im Innenraum des Apparates. Stabförmige Sonotroden erzeugen insbesondere ein akustisches Radialfeld, vorzugsweise Ultraschall-Radialfeld.

In einem weiteren geeigneten Ausführungsbeispiel der vorliegenden Erfindung ist die Sonotrode in einem Reaktor angeordnet, das heißt der Apparat mit Innenraum ist selbst eine Prozeßapparatur, insbesondere ein Reaktor. Auf diese Weise ist es möglich, eine Prozeßapparatur bereitzustellen, in der spezielle Produkte entweder kontinuierlich oder in Chargenproduktion einer Schallbehandlung unterzogen werden können, um dann in einem nächsten Schritt einem Prozeß oder einer chemischen Umsetzung zur Verfügung gestellt werden zu können.

In einem weiteren bevorzugten Ausführungsbeispiel der vorliegenden Erfindung ist ein Apparat vorgesehen, bei dem der kürzeste Abstand mindestens einer Sonotrode von der Begrenzung des Innenraums ein ganzzahliges Vielfaches von der halben Wellenlänge, bevorzugt von der ganzen Wellenlänge, der von der Sonotrode emittierten Wellen beträgt. Durch diese Nebenbedingung kann durch die Anordnung der Sonotrode innerhalb des Innenraums des Apparates die Resonanzwirkung der Raumgeometrie ausgenutzt werden. Auf diese Weise lassen sich also beispielsweise stehende Wellen erzeugen, die bei entsprechender Anregung zu einer Verstärkung der Schallbehandlung führen können. So kann die Schallbehandlung der Produkte noch effizienter durchgeführt werden, insbesondere kann mit weniger Energieaufwand durch Ausnutzung von Resonanzeffekten ein höherer Grad an Vermischung oder Entmischung der Produkte im Innenraum erreicht werden. Eine Verbesserung der Wirkungsweise läßt sich erzielen, wenn in den Ringspalt zwischen Sonotrode und Außenwand Einbauten eingebracht werden, die die Strömung bevorzugt durch die Schwingungsmaxima (Amplitudenmaxima) der stehenden Welle führen.

Ein weiteres vorteilhaftes Ausführungsbeispiel der vorliegenden Erfindung sieht einen Apparat vor, bei dem mindestens eine Sonotrode zumindest teilweise von einem Rohrresonator umgeben ist. Durch die Anordnung eines Rohrresonators um eine Sonotrode herum kann die Schallwirkung nochmals derart verstärkt werden, so daß sich insbesondere Produkte, die sich zwischen Sonotrode und Rohrresonator befinden, verstärkt schallbehandelt werden. Ein Rohrresonator trägt auch der Geometrie der insbesondere stabförmigen Sonotroden Rechnung, da hierdurch ein Resonatoraufbau erzielt werden kann, der die gesamte Zylindergeometrie ausnutzt.

In einem weiteren bevorzugten Ausführungsbeispiel der vorliegenden Erfindung ist ein Apparat vorgesehen, bei dem mindestens eine Sonotrode im wesentlichen in der Mitte eines zylindrischen Reaktors angeordnet ist. Durch die Anordnung der Sonotrode in der Mitte eines zylindrischen Reaktors kann auch ohne die Verwendung eines speziellen Rohrresonators von der günstigen Geometrie Gebrauch gemacht werden. Bevorzugt dient hier die Geometrie des Reaktors selbst als Resonator. Das Produkt, das in diesem Reaktor steht oder durch diesen hindurchläuft, wird somit sehr effizient beschallt und erfährt bei entsprechend geringem Durchmesser des zylindrischen Reaktors eine nahezu gleichmäßige Schallbehandlung.

In einem weiteren bevorzugten Ausführungsbeispiel der vorliegenden Erfindung ist ein Apparat vorgesehen, bei dem mehrere Sonotroden in dem Innenraum bzw. dem Reaktor angeordnet sind. Auf diese Weise kann erreicht werden, daß durch das Zusammenspiel der verschiedenen Sonotroden in dem Reaktor die Schallwellen in einem vorbestimmten Bereich des Reaktors konzentriert werden können. Diese Konzentration der Schallwellen ausgehend von den verschiedenen Sonotroden kann dazu führen, daß in bestimmten Bereichen eine Amplitudenverstärkung auftritt, bei der eine besonders intensive Schallbehändlung des sich dort befindenden Produkts erreicht werden kann. Durch die Kombination mit entsprechenden Strömungsbahnen der Produkte kann so erreicht werden, daß ein Hauptstrahl der Produkte durch diesen "fokussierten" Bereich von Schallwellen läuft, bevor er in anderen Bereichen des Reaktors behandelt wird. Es lassen sich auf diese Weise auch mehrere vorbestimmte Bereiche konstruieren, in denen eine solche nochmals intensivierte Schallbehandlung erfolgen kann.

In einem weiteren bevorzugten Ausführungsbeispiel der vorliegenden Erfindung ist ein Apparat vorgesehen, bei dem mindestens eine Sonotrode derart ausgebildet und in dem Apparat angeordnet ist, daß diese frequenzmoduliert betrieben werden kann. Auf diese Weise ist es möglich, durch die Reflexion und Überlagerung der Schallwellen diese in einem bestimmten Bereich zu konzentrieren. Insbesondere kann die Modulation der Frequenz über die Zeit erfolgen, so daß sich kontinuierlich ändernde Schallwellenmuster in dem Reaktor erzeugen lassen. Die Frequenz der Sonotrode kann auch durch eine periodische Amplitudenänderung überlagert und auf diese Weise zeitgesteuert die Amplitude bei gleichbleibender oder ebenfalls modulierter Frequenz der Sonotrode verändert werden. Durch die Frequenzmodulation der einzelnen Sonotrode ist es möglich, Bereiche mit besonders hoher Amplitudenstärke in dem Reaktor räumlich zu verändern. Es ist also beispielsweise möglich, einen solchen Bereich besonders hoher Amplitudenstärke zwischen zwei Punkten hin- und herwandern zu lassen. Durch den Einsatz mehrerer Sonotroden, die alle derart ausgebildet und in dem Apparat angeordnet sind, daß sie frequenzmoduliert betrieben werden können, ist es insbesondere möglich, durch die Reflexion und Überlagerung der Schallwellen diese in ganz bestimmten Bereichen auch zeitlich steuerbar, zu konzentrieren. Es ist somit möglich, durch Überlagerung einerseits die Frequenz und andererseits die Amplitude bzw. in Kombination beide zu verändern. Auf diese Weise gewonnene Bereiche modifizierter Amplitude oder Frequenz können örtlich "wandern" und auf diese Weise nochmals zur Intensivierung des Mischprozesses innerhalb des Behälters beitragen. Auf diese Weise eignen sich die erfindungsgemäßen Apparate insbesondere für die kontinuierliche Produktion.

Ein weiteres geeignetes Ausführungsbeispiel der vorliegenden Erfindung sieht einen Apparat vor, bei dem sich mindestens eine Sonotrode in dem Reaktor bewegen läßt, d.h. die Position verändert werden kann. Auf diese Weise ist es ganz direkt möglich, die Sonotrode in verschiedenen Bereichen des Apparates einzusetzen und bei Bedarf örtlich zu verändern. Besonders bevorzugt können die Sonotroden auch in ein Rührelement integriert sein. Vorteilhafterweise läßt sich auch das Rührelement selbst durch eine Sonotrode anregen oder als Sonotrode verwenden.

In einem weiteren besonders geeigneten Ausführungsbeispiel der vorliegenden Erfindung ist ein Apparat vorgesehen, bei dem sich mehr als eine Sonotrode abgestimmt mit mindestens einer anderen Sonotrode in dem Reaktor bewegen läßt. Auf diese Weise ist es möglich, die Effekte der sich im Reaktor bewegenden Sonotrode mit dem von anderen Sonotroden ausgehenden Schall- und Sonarfeld zu kombinieren. Insbesondere läßt sich dadurch in zeitlich vorbestimmten Intervallen Schallwellen in einem bestimmten Bereich des Reaktors konzentrieren.

Eine besonders bevorzugte Verwendung des erfindungsgemäßen Apparates sieht die Durchführung chemischer Reaktionen und/oder die Intensivierung des Stoffübergangs in mehrphasigen Stoffsystemen wie beispielsweise Polymerdispersionen, Acrylsäure enthaltenden Mischungen und wäßrigen Lösungen von Copolymeren und Harzen vor.

Eine weitere vorteilhafte Verwendung eines erfindungsgemäßen Apparates sieht die Intensivierung des Stoffaustausches und/oder die Vermischung von mindestens zwei flüssigen Phasen oder von mindestens einer flüssigen und mindestens einer gasförmigen Phase, oder von mindestens einer flüssigen und mindestens einer festen Phase, oder von mindestens einer gasförmigen und mindestens einer festen Phase, oder von mindestens einer festen, mindestens einer flüssigen und mindestens einer gasförmigen Phase vor. Durch die Verwendung eines erfindungsgemäßen Apparates zur Intensivierung des Stoffaustausches mehrphasiger Systeme ist es möglich, diese Phasen effizienter miteinander zu ver- oder entmischen.

In einer weiteren bevorzugten Ausführungsform der vorliegenden Erfindung wird der erfindungsgemäße Apparat zur Intensivierung des Stoffaustausches verwendet, wobei die feste Phase einen Katalysator umfaßt. Auf diese Weise ist es möglich, einen Katalysator in einem solchen durch Schallbehandlung intensivierten Prozeß zu verwenden oder aber einen gebrauchten Katalysator durch Schallbehandlung selbst zu reinigen.

In einer weiteren vorteilhaften Verwendung des erfindungsgemäßen Apparats wird eine feindisperse Verteilung einer in einer anderen Phase von fluiden Zwei- und Mehrphasensystemen erzeugt. Eine solche feindisperse Verteilung kann entweder selbst das gewünschte Endprodukt sein oder als Ausgangsprodukt für das sogenannte "Micromixing" verwendet werden, bei dem, ännlich einer Emulsion, sehr feine Vermischungen im µm-Bereich erzeugt werden können.

In einer weiteren bevorzugten Ausführungsform der vorliegenden Erfindung wird ein erfindungsgemäßer Apparat dafür verwendet, um aus dem Reaktor austretende Produkte, insbesondere die vermischten Komponenten, einem weiteren Verfahrensschritt zuzuführen. Auf diese Weise lassen sich die in dem Reaktor durch Schallbehandlung gewonnenen Mischprodukte einem weiteren Verfahrensschritt zuführen und die so gewonnenen Zwischenprodukte weiterverarbeiten.

Bevorzugt wird der erfindungsgemäße Apparat auch zur Desagglomeration von Feststoffpartikeln, insbesondere von feinen Katalysatorpartikeln, vorzugsweise solchen mit einer mittleren Partikelgröße von 1 bis 100 µm, verwendet. Auf diese Weise können zusammengebackene Katalysatorpartikel wieder voneinander getrennt werden und stehen somit mit einer wieder vergrößerten Oberfläche für einen Prozeßschritt zur Verfügung.

Eine weitere vorteilhafte Verwendung des erfindungsgemäßen Apparats ist der Einsatz bei Entgasungsprozessen. Hier kann durch die intensive und effiziente Schallbehandlung des Produkts das Entweichen eines gelösten Gases erhöht werden. Diese Entgasungsprozesse können sowohl kontinuierlich sein als auch chargenmäßig in einem Behälter durchgeführt werden.

Besonders bevorzugt werden mehrere erfindungsgemäße Apparate in Kombination, insbesondere in Reihenschaltung, eingesetzt. Auf diese Weise lassen sich durch verschiedene erfindungsgemäße Apparate die Wirkung insbesondere in kontinuierlichen Prozessen erhöhen oder aber durch verschieden ausgestaltete Geometrien der verschiedenen Apparate spezielle Mischeffekte durch die Kombination speziell ausgebildeter Apparate erreichen.

In der Zeichnung werden weitere vorteilhafte Ausführungsbeispiele der vorliegenden Erfindung dargestellt. Es zeigen:
- Fig. 1: eine Querschnittsansicht eines Ausführungsbeispiels der vorliegenden Erfindung.
- Fig. 2: einen Querschnitt eines weiteren Ausführungsbeispiels der vorliegenden Erfindung.
- Fig. 3: einen Querschnitt durch einen erfindungsgemäßen Apparat mit mehreren Sonotroden.
- Fig. 4: einen Querschnitt durch einen erfindungsgemäßen Apparat mit mehreren Sonotroden und einem Rührgerät.
- Fig. 5: eine schematische Ansicht eines Querschnitts durch einen erfindungsgemäßen Apparat mit mehreren Sonotroden.

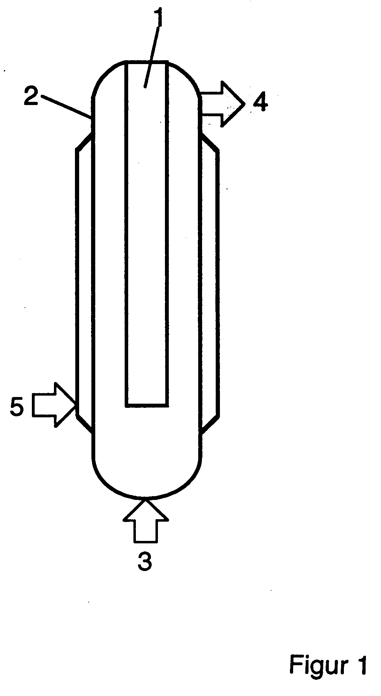

In Fig. 1 ist eine stabförmige Sonotrode 1 von einem als Strömungsrohr ausgebildeten Reaktor 2 umgeben. An dem Strömungsrohr befindet sich eine Temperiereinrichtung 5, über die die Temperatur in dem Strömungsrohr geregelt werden kann. Edukte 3 werden von unten in das Strömungsrohr eingeleitet, strömen in dem Strömungsrohr an der stabförmigen Sonotrode vorbei und verlassen als vermischte Komponenten 4 den Reaktor 2. Das von der stabförmigen Sonotrode ausgestrahlte akustische Radialfeld wird vom Strömungsrohr 2 reflektiert und bei entsprechender Resonatoreigenschaft verstärkt.

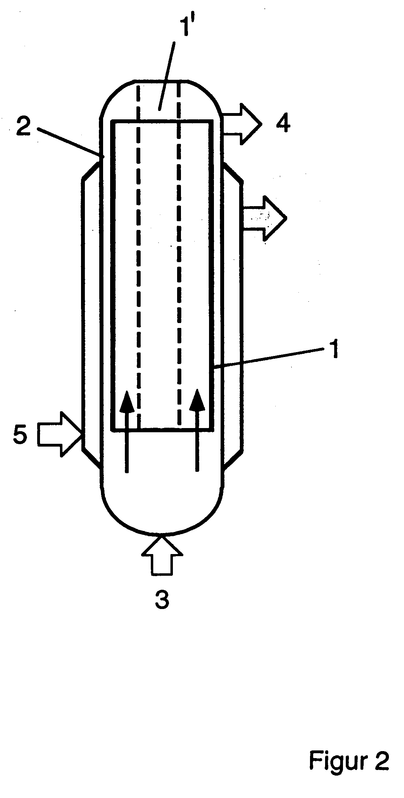

In Fig. 2 ist in dem Ausführungsbeispiel der Fig. 1 eine weitere rohrförmige Sonotrode 1' angeordnet. Diese zusätzliche rohrförmige Sonotrode 1' strahlt radial nach innen in Richtung der von ihr umgebenen ersten stabförmigen Sonotrode 1 mit akustischem Radialfeld ab. Auf diese Weise wird das Feld zwischen der Sonotrode 1 und der Sonotrode 1' nochmals verstärkt und die Ausgangsstoffe 3 in dem Reaktor 2 besonders intensiv zum Produkt 4 vermischt.

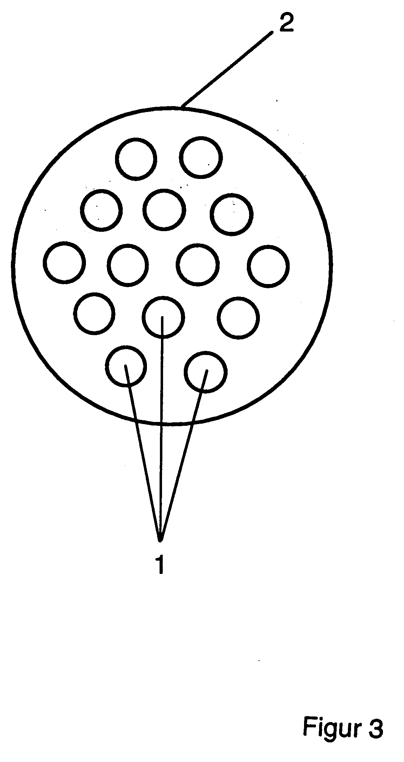

In Fig. 3 ist ein Querschnitt durch ein Strömungsrohr dargestellt, in dem mehrere stabförmige Sonotroden 1 in dem Reaktor 2 parallel zueinander angeordnet sind. Durch eine derartige Aufteilung wird das von jeder Sonotrode ausgehende akustische Radialfeld von den Radialfeldern der übrigen Sonotroden 1 überlagert und daher in gewissen Bereichen derart verstärkt, daß der Vermischungsvorgang nochmals intensiviert wird.

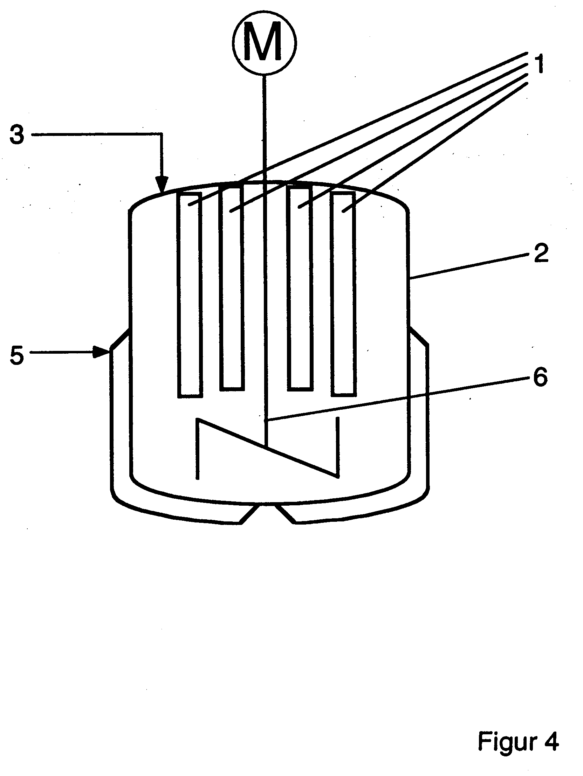

In Fig. 4 ist ein schematischer Querschnitt durch einen erfindungsgemäßen Apparat gezeigt, in dem mindestens vier stabförmige Sonotroden 1 neben einem Rührgerät 6 eingesetzt werden. Die Edukte 3 werden in den Behälter 2 gegeben, in dem die Intensivierung des Stoffübergangs sowohl durch die stabförmigen Sonotroden 1 mit akustischem Radialfeld wie auch das Rührgerät 6 stattfindet. Eine Temperierung des Behälters 2 erfolgt über die Temperiereinrichtung 5.

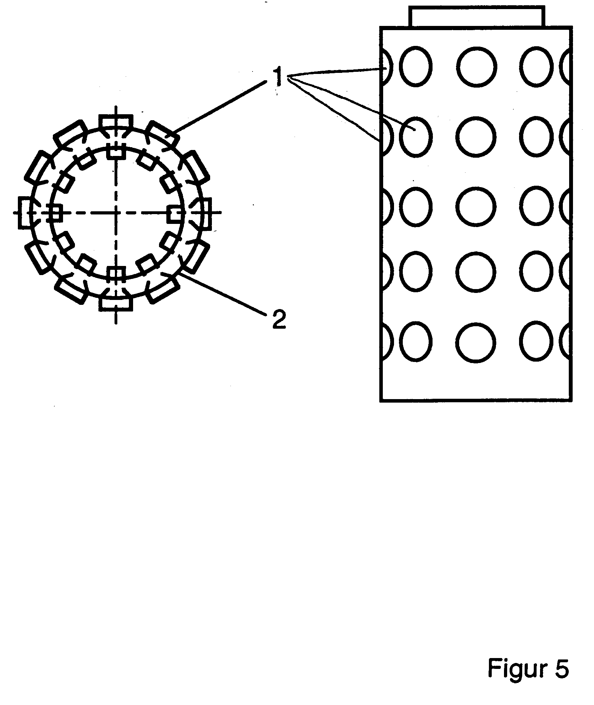

In Fig. 5 ist ein Querschnitt durch einen weiteren erfindungsgemäßen Apparat gezeigt, bei dem die Sonotroden radial nach innen in den Behälter reichen. Durch eine derartige Anordnung kann ein Vermischungsvorgang insbesondere im Außenbereich des Behälters erfolgen. Wird ein solcher Behälter in Kombination mit einem beispielsweise in der Mitte liegenden Rührgerät oder einem in der Mitte wirkenden Strahlschlaufenapparat verwendet, so können die von der Mitte an den Rand heraus geförderten Komponenten im Randbereich von den Sonotroden 1 nochmals besonders intensiviert und effizient vermischt werden.

### BEISPIEL

180 g eines Polyesteracrylates (Laromer LR 8895®, BASF) werden mit 120 g einer 30%igen wäßrigen Lösung eines Copolymers aus Vinylpyrrolidon und Vinylproprionat (Collacral VL®, BASF) und 96 g VE-Wasser in einem Becherglas 150 Sekunden mit einem Blattrührer gerührt. Nach einer 100%igen Entgasung (150 Sekunden) wird 300 Sekunden mit Ultraschall beschallt. Das Produkt wird über Perlonfilter (120 µm) abgefüllt. Man erhält eine feinteilige Emulsion mit einem Maximum der Verteilung der Teilchendurchmesser bei 0,48 µm.

### VERGLEICHSBEISPIEL (Standardfahrweise)

154,3 g einer 17,5%igen wäßrigen lösung eines Copolymers aus Vinylpyrrolidon und Vinylproprionat (Collacral VL®, BASF) werden in einem Kolben vorgelegt. Anschließend werden bei einer Rührgeschwindigkeit von 200 U/min 270 g eines Polyesteracrylates (Laromer LR 8800®, BASF) innerhalb von 130 Minuten eingerührt. Nach 30 Minuten Nachrührzeit werden innerhalb von 40 Minuten 169,7 g Wasser zugefahren. Man läßt noch 30 Minuten nachrühren und füllt über 30 µm Perlonfilter ab. Man erhält eine feinteilige Emulsion mit einem mittleren Teilchendurchmesser von 0,4 µm.

Ein Vergleich der nach dem Beispiel bzw. Vergleichsbeispiel benötigten Zeit zur Herstellung der Emulsion zeigt, daß durch die Erfindung die Zeit für die Herstellung der Emulsion ohne Qualitätsverlust deutlich verkürzt werden kann.

Mit der vorliegenden Erfindung ist ein Apparat bereitgestellt worden, der im Falle der fluiden Zwei- und Mehrphasensysteme eine feindisperse Verteilung der einen in der anderen Phase erzeugt bzw. den Transport von einer oder mehreren Komponenten aus der einen in die andere Phase beschleunigt. Sofern in mindestens zwei der Phasen miteinander reaktionsfähige chemische Verbindungen enthalten sind, wird dadurch die chemische Umsetzung der Verbindungen beschleunigt. Mit dem erfindungsgemäßen Apparat kann aber auch eine feindisperse Verteilung der nicht ineinander mischbaren Phasen erzeugt werden und dieses zweiphasige Gemisch anschließend einem Reaktionsraum zugeführt bzw. zu anderen verfahrensspezifischen Schritten verwendet werden. Hierbei kann es sich auch um mehrphasige Systeme mit Feststoffen, z.B. Katalysatoren, handeln.

Mit dem Apparat der vorliegenden Erfindung läßt sich insbesondere ein kontinuierlicher Betrieb erreichen, ein besonders intensives Schallfeld ausbilden, wobei der Apparat keine Neigung zur Verschmutzung aufweist und gute Reinigungsmöglichkeiten bietet. Mit einem solchen erfindungsgemäßen Apparat kann ein hoher Wirkungsgrad bei geringem Energiebedarf und einer verhältnismäßig geringen Anzahl von Sonotroden erreicht werden. Die Ultraschallintensität ist stufenlos regelbar und zusätzlich ist eine Temperierung möglich. Der erfindungsgemäße Apparat läßt sich mit geringem konstruktivem Aufwand herstellen und leicht in vorhandene Anlagen integrieren. Das Verfahren ist insbesondere für mehrphasige Reaktionen geeignet.

## Patentansprüche

1. Apparat mit Innenraum zur Schallbehandlung von Produkten, insbesondere zur Vermischung oder Entmischung mindestens zweier Produkte im Innenraum, dadurch gekennzeichnet, daß im Innenraum mindestens eine, insbesondere stabförmige, Sonotrode angeordnet ist.

2. Apparat nach Anspruch 1 dadurch gekennzeichnet, daß der Apparat ein Prozeßapparat, insbesondere ein Reaktor, ist.

3. Apparat nach einem der Ansprüche 1 oder 2, dadurch gekennzeichnet, daß der kürzeste Abstand mindestens einer Sonotrode von der Begrenzung des Innenraumes ein ganzzahliges Vielfaches von der halben Wellenlänge, bevorzugt der ganzen Wellenlänge, der von der Sonotrode emittierten Wellen beträgt.

4. Apparat nach einem der Ansprüche 1 bis 3, dadurch gekennzeichnet, daß mindestens eine Sonotrode zumindest teilweise von einem Rohrresonator umgeben ist.

5. Apparat nach einem der Ansprüche 1 bis 4, dadurch gekennzeichnet, daß mindestens eine Sonotrode im wesentlichen in der Mitte eines zylindrischen Reaktors angeordnet ist.

6. Apparat nach einem der Ansprüche 1 bis 5, dadurch gekennzeichnet, daß mehrere Sonotroden in dem Reaktor angeordnet sind.

7. Apparat nach einem der Ansprüche 1 bis 6, dadurch gekennzeichnet, daß mindestens eine Sonotrode derart ausgebildet und in dem Apparat angeordnet ist, daß diese frequenzmoduliert betrieben werden kann.

8. Apparat nach einem der Ansprüche 1 bis 7, dadurch gekennzeichnet, daß sich die Posiiton mindestens einer Sonotrode in dem Reaktor verändern läßt.

9. Apparat nach einem der Ansprüche 1 bis 8, dadurch gekennzeichnet, daß sich die Position mehr als eine Sonotrode abgestimmt mit mindestens einer anderen Sonotrode in dem Reaktor bewegen läßt.

10. Verwendung eines Apparates nach einem der vorhergehenden Ansprüche zur Durchführung chemischer Reaktionen und/oder zur Intensivierung des Stoffüberganges in mehrphasigen Stoffsystemen, insbesondere zur Intensivierung des Stoffaustausches und/oder zur Entmischung
- von mindestens zwei flüssigen Phasen, oder
- von mindestens einer flüssigen und mindestens einer gasförmigen Phase, oder
- von mindestens einer flüssigen und mindestens einer festen Phase, oder
- von mindestens einer gasförmigen und mindestens einer festen Phase, oder
- von mindestens einer festen, mindestens einer flüssigen und mindestens einer gasförmigen Phase.
